(19) Europäisches Patentamt
European Patent Office
Office européen des brevets

(11) **EP 2 765 545 A1**

(12) **DEMANDE DE BREVET EUROPEEN**

(43) Date de publication:
**13.08.2014 Bulletin 2014/33**

(51) Int Cl.:
*G06Q 10/06* (2012.01)    *G06Q 50/28* (2012.01)

(21) Numéro de dépôt: **14290029.9**

(22) Date de dépôt: **05.02.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **08.02.2013 FR 1300285**

(71) Demandeur: **MBDA France**
**75016 Paris (FR)**

(72) Inventeurs:
• **Leboucher, Cédric**
**92170 Vanves (FR)**

• **Le Menec, Stéphane**
**92190 Meudon (FR)**
• **Shin, S. Hyosang**
**Milton Keynes, MK88H N (GB)**
• **Kotenkoff, Alexandre**
**92320 Chatillon (FR)**

(74) Mandataire: **Hauer, Bernard**
**Gevers France**
**41, avenue de Friedland**
**75008 Paris (FR)**

(54) **Procédé et dispositif d'optimisation multi-objectif**

(57) - Le système d'optimisation (1) comporte des moyens (4) pour entrer des données, des moyens (2) pour définir un critère pour chacun des objectifs considérés à l'aide de données entrées, un élément (6) pour optimiser individuellement chacun des critères afin d'obtenir un individu optimal pour chacun de ces critères, un individu optimal comprenant au moins une valeur optimale et faisable pour le critère, un élément (8) pour déterminer, à l'aide d'un algorithme de jeux évolutionnaires, des coefficients de survie desdits individus optimaux, et un élément (10) pour déterminer une solution optimale par mutation des individus optimaux, à l'aide des coefficients de survie et de l'application d'un opérateur de mutation, la solution optimale comprenant au moins une valeur optimale finale permettant d'optimiser la réalisation de l'ensemble des objectifs considérés.

Fig. 1

EP 2 765 545 A1

**Description**

La présente invention concerne un dispositif et un procédé d'optimisation multi-objectif, ainsi que notamment un système et une méthode d'allocations de ressources comprenant respectivement un tel procédé et un tel dispositif.

On entend par «optimisation multi-objectif » (ou optimisation d'une pluralité d'objectifs), la définition d'une solution optimale qui optimise au mieux simultanément plusieurs objectifs différents.

Une optimisation multi-objectif existe dans de nombreux domaines, notamment industriels, dans lesquels doit être définie une telle solution optimisée. En général, ces objectifs ne sont pas toujours comparables deux à deux, comme par exemple dans le domaine de la logistique lorsque l'on cherche à maximiser le nombre de livraisons en minimisant le temps de livraison et la distance parcourue par les moyens de livraison. On peut également citer, à titre d'illustration, la configuration d'un véhicule qui doit maximiser ses performances tout en minimisant son poids et sa consommation en carburant.

Bien qu'applicable à de nombreux domaines, la présente invention s'applique plus particulièrement au domaine militaire, et plus précisément, au cas des systèmes de commande et de contrôle (« Command & Control (C2) » en anglais) qui utilisent un calcul d'allocation de ressources, à savoir un module d'optimisation et de coordination qui calcule numériquement la meilleure solution d'allocation par exemple pour N menaces, avec P missiles et L lanceurs (de missiles), N, P et L étant des entiers. Chacune des allocations proposées entraîne de nouvelles contraintes sur les autres. Bien évidemment, les contraintes dans une telle situation sont multiples, allant de contraintes opérationnelles à des contraintes techniques.

Dans cette application, les objectifs à considérer sont, par exemple, la gestion équilibrée des stocks, la rapidité d'intervention, la maximisation des probabilités de succès de la mission, la minimisation des risques liés à un survol d'une zone défendue, la maximisation des probabilités de survie de points que l'on défend,...Dans une telle situation, le nombre d'objectifs varie généralement entre trois et dix. Ces objectifs comprennent autant de critères différents, qui sont généralement non comparables deux à deux directement. Le besoin d'un procédé d'optimisation capable de réaliser un compromis entre tous ces aspects hétérogènes devient donc nécessaire pour une prise de décision en temps réel, tout en tenant compte de l'importance de chaque critère.

Pour réaliser une optimisation multi-objectif, on utilise généralement un procédé qui prévoit de mettre en oeuvre les étapes suivantes :

A/ définir un critère pour chacun des objectifs considérés. Dans le cadre de la présente invention, un critère est une valeur ou un ensemble de valeurs calculables permettant de réaliser un objectif ; puis
B/ réaliser une optimisation multicritère.

Il existe une réelle difficulté voire une impossibilité à trouver une solution qui satisfasse tous les critères de manière optimale.

Les principaux défaut et difficulté des procédés usuels sont relatifs à la comparaison des critères qui ne sont, a priori, pas toujours comparables.

Une première approche usuelle, concernant une agrégation des objectifs, prévoit d'utiliser une somme, linéaire ou non, des différentes fonctions. Une telle approche présente la particularité de convertir un problème multi-objectif en problème mono-objectif qui souvent est plus simple à résoudre.

Toutefois, une telle modification du problème dans sa modélisation nécessite des compromis. Une somme pondérée implique la définition des coefficients de cette agrégation. La principale difficulté d'un tel procédé est que le choix de ces coefficients doit être établi de manière à représenter exactement le problème défini. De plus, on peut noter que, dans la plupart des cas, une simple modification de ces coefficients peut conduire à des résultats complètement différents. Une analyse de sensibilité est donc requise pour valider la robustesse de la solution proposée.

Dans le cas de la transformation d'un problème multi-objectif en problème mono-objectif par la méthode de l'agrégation, on rencontre donc une difficulté à déterminer les coefficients qui résultent de la linéarisation des objectifs, mais également concernant la validité de la modélisation de cette fonction objectif et sa pertinence s'agissant de déterminer une solution meilleure qu'une autre. Cela induit également des problèmes de sensibilité qui peuvent rendre la solution instable.

Une autre approche usuelle, dite « de Pareto », prévoit de conserver l'ensemble des objectifs et de les traiter indépendamment selon un principe très simple : une solution est considérée comme optimale s'il n'existe pas de moyen d'améliorer cette solution selon un objectif sans en détériorer les autres. L'un des défauts principaux de ce procédé usuel est qu'il demande l'intervention d'un expert afin de choisir la solution la plus adaptée à la résolution du problème.

Dans une approche de Pareto, si les objectifs sont vraiment très nombreux, la comparaison entre eux peut devenir compliquée. Dans le cas où un expert doit choisir parmi un ensemble de solutions, si cet ensemble devient trop important une réelle difficulté apparaît dans le traitement de ce problème.

Par conséquent, pour l'optimisation multi-objectif considérée dans la présente invention :

- le grand nombre d'objectifs à optimiser simultanément rend la modélisation par agrégation des objectifs très instable et compliquée. De plus, la variété des scénarios à traiter rend d'autant plus compliquée l'évaluation d'une solution de manière généraliste ; et
- si l'approche Pareto semble convenir davantage par son approche plus généralisée des objectifs en cherchant des points frontières qui répondent à tous les objectifs de manière optimale, deux points majeurs ne sont pas abordés dans cette approche. Le premier concerne la forme de la solution qui est un ensemble et qui demande donc l'intervention d'un expert pour la décision finale. Le second est le traitement indépendant des critères. En effet, les critères ont souvent un lien entre eux et les considérer sans tenir réellement compte des autres critères apparaît comme une limite de cette approche.

Par conséquent, il n'existe pas de dispositif ou de moyens techniques permettant de réaliser une optimisation multi-objectif telle que précitée.

La présente invention concerne un dispositif d'optimisation multi-objectif qui a pour objet de remédier aux inconvénients précités.

A cet effet, selon l'invention, le dispositif d'optimisation multi-objectif, du type comprenant :

- des premiers moyens pour définir un critère pour chacun des objectifs considérés ; et
- des deuxièmes moyens pour réaliser automatiquement une optimisation multicritères,

est remarquable en ce que lesdits deuxièmes moyens comprennent :

- un élément pour optimiser individuellement chacun desdits critères, afin d'obtenir un individu optimal pour chacun de ces critères, un individu optimal comprenant au moins une valeur optimale et faisable pour ledit critère ;
- un élément pour déterminer, à l'aide d'un algorithme de jeux évolutionnaires, des coefficients de survie desdits individus optimaux ; et
- un élément pour déterminer une solution optimale par mutation des individus optimaux, à l'aide desdits coefficients de survie et de l'application d'un opérateur de mutation, ladite solution optimale comprenant au moins une valeur optimale finale permettant d'optimiser la réalisation de l'ensemble des objectifs considérés.

Ainsi, grâce à l'invention, on obtient un dispositif permettant de réaliser une optimisation multi-objectif.

Le dispositif conforme à la présente invention comprend ainsi, comme précisé ci-dessous, des moyens techniques pour générer des données, des moyens techniques pour traiter automatiquement des données (afin de déterminer une solution optimale) et des moyens techniques pour utiliser les résultats du traitement.

En outre, avantageusement :

- les moyens d'entrée de données comportent des moyens (par exemple un radar) qui permettent de fournir automatiquement des données et/ ou des moyens permettant à un opérateur d'entrer des données ; et/ou
- les moyens utilisateurs comportent des moyens d'affichage qui affichent la solution optimale sur un écran ; et/ou
- les moyens d'affichage et les moyens permettant à un opérateur d'entrer des données font partie d'une interface homme/machine ; et/ou
- le dispositif comporte, de plus, un élément pour vérifier la faisabilité de la solution optimale, reçue du troisième élément, et en cas de non faisabilité, pour déterminer une nouvelle solution optimale correspondant à la solution faisable la plus proche de cette solution optimale.

Ainsi, grâce à l'invention, pour un problème multi-objectif donné, on considère individuellement et séparément chaque objectif, par l'intermédiaire de son critère associé. Puis, à l'aide d'un moyen d'optimisation usuel, on définit un individu optimal pour chaque critère considéré. Les solutions proposées doivent être faisables (c'est-à-dire réalisables).

Ensuite, on parcourt un espace des solutions complet qui prend en compte tous les critères, ainsi que la faisabilité de la solution. La particularité de cette phase réside dans le principe que la faisabilité d'une solution devient un critère binaire rendant la survie d'un individu nulle si la solution proposée n'est pas faisable. Ainsi, les individus non faisables vont disparaître de la population (ou de l'ensemble) de solutions considérées pour ne laisser place qu'à une population capable de vivre dans le milieu considéré. Cette auto-élimination des individus non faisables est un avantage qui permet de naturellement s'éloigner des solutions non réalisables, et de ce fait, le temps de calcul en est largement réduit.

Ainsi, en testant la survie d'individus optimaux dans leur milieu, on va tester comment ils vont s'adapter à un environnement où cohabitent tous les individus optimaux (selon chacun des critères). Ensuite, une fois la population stabilisée, un opérateur de mutation modifie les individus afin de créer l'individu (à savoir la solution optimale) capable de survivre à n'importe quel milieu de manière stable.

La présente invention présente donc les avantages suivants :

- une capacité à traiter des objectifs très hétérogènes ;
- une sélection naturelle des critères les plus influant en présence des autres critères ; et
- une possibilité de comparer un nombre élevé de critères.

En outre, le dispositif conforme à l'invention permet de garantir la stabilité de la solution (optimale) finale. En effet, le principe des jeux évolutionnaires et de la convergence des résultats vers une solution stable permet de garantir une stabilité des résultats. Cela se traduit par une robustesse du procédé conforme à l'invention à des changements mineurs dans le choix des critères.

La présente invention concerne donc un dispositif d'optimisation multi-objectif qui permet, notamment, de remédier aux problèmes :

- d'un procédé d'agrégation, à savoir :

    • de grandes difficultés de modélisation lorsque le problème comprend beaucoup d'objectifs ; et
    • un paramétrage qui est très dépendant de l'application, et peut être instable ; et

- d'une approche Pareto, à savoir :

    • une considération indépendante des objectifs sans les confronter réellement ; et
    • une demande d'intervention d'un expert pour la décision finale.

Le dispositif conforme à l'invention d'optimisation multi-objectif peut être appliqué dans de très nombreux domaines, tels que notamment la logistique (civile ou militaire), la gestion des transports (réseaux ferroviaires, aéroports, trafic aérien), la gestion des ressources au sens large (domaine de l'informatique, des réseaux, gestion de flottes), et le domaine de l'aéronautique tant civil que militaire (planification de mission, contrôle de mission).

La présente invention concerne également un système d'allocation de ressources, qui peut être utilisé dans différents domaines, et qui comprend le dispositif précité. Elle concerne également un système de traitement de menaces dans le domaine militaire, notamment de type commande et contrôle (C2), comprenant une allocation d'armes pour traiter les menaces, ledit système comportant :

- une première unité pour récupérer des informations sur la situation considérée ;
- une deuxième unité, comprenant le dispositif précité, pour traiter ces informations afin de déduire une proposition d'engagement, en déterminant tout d'abord des fenêtres de tir à partir desdites informations, puis en déduisant la proposition d'engagement à partir de ces fenêtres de tir ; et
- une troisième unité pour mettre en oeuvre une étape d'approbation de la proposition de l'engagement, l'engagement étant réalisé conformément à une proposition d'engagement approuvée à l'aide de ladite troisième unité.

En outre, avantageusement :

- la première unité comporte au moins un radar qui transmet audit dispositif des informations sur la situation aérienne de l'environnement d'une zone à protéger par le système ; et/ou
- le système comporte, de plus, une interface homme/machine permettant à un opérateur de réaliser une approbation ; et/ou
- le système comporte, de plus, des moyens d'affichage qui affichent la proposition d'engagement approuvée par ladite troisième unité.

La présente invention concerne, en outre, un procédé d'optimisation multi-objectif. Selon l'invention, ledit procédé d'optimisation multi-objectif, selon lequel de façon automatique on met en oeuvre les étapes suivantes :

    A/ on génère des données et on définit un critère pour chacun des objectifs considérés ; et
    B/ on réalise une optimisation multicritère, que l'on utilise ensuite,

est remarquable en ce qu'à l'étape B/, on met en oeuvre les opérations successives suivantes :

    a) on optimise individuellement (et séparément) chacun desdits critères, pour obtenir un individu optimal pour chacun de ces critères, un individu optimal comprenant au moins une valeur optimale et faisable pour ledit critère ;

b) à l'aide d'un algorithme de jeux évolutionnaires, on détermine des coefficients de survie desdits individus optimaux ; et

c) on détermine une solution optimale par mutation des individus optimaux, à l'aide desdits coefficients de survie et de l'application d'un opérateur de mutation, ladite solution optimale comprenant au moins une valeur (ou composante) optimale finale permettant d'optimiser la réalisation de l'ensemble des objectifs considérés.

Avantageusement, à l'étape B/b) :

b1) pour chacun desdits individus optimaux, on évalue sa performance selon chacun des critères autres que le critère relatif à l'individu optimal considéré, de manière à obtenir une matrice d'évaluation (ou matrice de gains) qui contient les scores correspondants des différents individus optimaux selon tous les autres critères ; et

b2) on évalue, à l'aide de ladite matrice d'évaluation et de l'algorithme de jeux évolutionnaires, la survie des individus optimaux selon chacun des autres critères, de manière à obtenir lesdits coefficients de survie. De préférence, lesdits coefficients de survie correspondent aux taux à l'équilibre de la population des individus optimaux.

En outre, de façon avantageuse, à l'étape B/c), on calcule chaque composante de la solution optimale à l'aide du barycentre des composantes correspondantes des individus optimaux, pondéré par le taux à l'équilibre.

De plus, dans un mode de réalisation préféré, à l'étape B/c), on réalise une optimisation par essaim particulaire, de type «Particle Swarm Optimisation», telle que précisée ci-dessous.

De même, dans un mode de réalisation préféré, on réalise également une optimisation par essaim particulaire à l'étape B/a), bien que d'autres solutions usuelles puissent également être mises en oeuvre à cette étape B/a).

Par ailleurs, avantageusement, à l'étape B/c), on vérifie la faisabilité de la solution optimale, et en cas de non faisabilité, on détermine une nouvelle solution optimale correspondant à la solution faisable la plus proche de cette solution optimale (non faisable).

La présente invention concerne également une méthode d'allocation de ressources, qui peut être utilisée dans différents domaines, comme indiqué ci-dessus, et qui comprend un procédé d'optimisation tel que précité.

En outre, avantageusement, elle concerne également une méthode de traitement de menaces dans le domaine militaire, comprenant une allocation d'armes pour traiter les menaces. Cette méthode, selon laquelle on met en oeuvre les étapes successives suivantes :

α) on récupère des informations sur la situation considérée ;

β) on traite ces informations pour en déduire une proposition d'engagement, en déterminant tout d'abord des fenêtres de tir à partir desdites informations, puis en déduisant la proposition d'engagement à partir de ces fenêtres de tir, ladite proposition d'engagement précisant l'allocation des armes et les instants de tir pour traiter les menaces ; et

γ) on prévoit une étape d'approbation de la proposition de l'engagement, l'engagement étant réalisé conformément à une proposition d'engagement approuvée à cette étape γ),

est remarquable, selon l'invention, en ce qu'à l'étape β), on détermine la proposition d'engagement en mettant en oeuvre le procédé d'optimisation multi-objectif précité.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 est un graphique permettant d'expliquer des caractéristiques du procédé mis en oeuvre par le dispositif conforme à l'invention.

La figure 3 est le schéma synoptique d'un système de traitement de menaces, utilisant un dispositif conforme à l'invention.

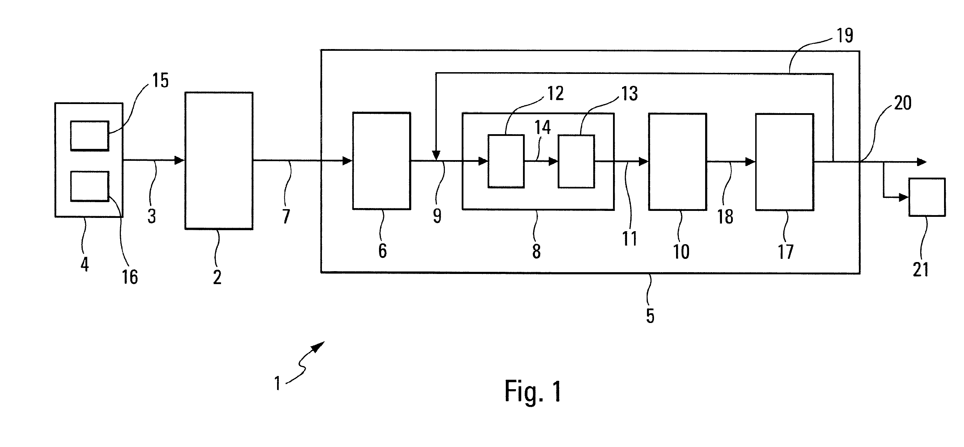

Le dispositif 1 conforme à l'invention et représenté schématiquement sur la figure 1 est destiné à réaliser de façon automatique une optimisation multi-objectif, c'est-à-dire une optimisation d'une pluralité d'objectifs différents, afin de déterminer une solution optimale qui optimise au mieux la pluralité d'objectifs ainsi considérés.

Pour ce faire, ledit dispositif d'optimisation 1 est du type comprenant :

- des moyens d'entrée de données 4 ;
- des moyens 2 pour définir un critère pour chacun des objectifs considérés, à partir d'informations ou de données reçues (par l'intermédiaire d'une liaison 3) des moyens 4 d'entrée de données ;
- des moyens 5 pour réaliser une optimisation multicritère, à partir de ces critères ; et
- des moyens utilisateurs 21 précisés ci-dessous.

Dans le cadre de la présente invention, les 4 moyens d'entrée de données peuvent comporter :

- des moyens 15 (des dispositifs ou des systèmes tels qu'un radar par exemple) qui permettent de fournir automatiquement des données au dispositif 1 ; et/ou
- des moyens 16 permettant à un opérateur d'entrer des données notamment manuellement. Ces moyens 16 peuvent comporter un clavier, une souris, un pavé tactile,..., ou tout autre moyen usuel, associé par exemple à un écran, qui permet à un opérateur d'entrer des données dans ledit dispositif 1.

Selon l'invention, lesdits moyens 5 comprennent, comme représenté sur la figure 1 :

- un élément 6 qui est relié par l'intermédiaire d'une liaison 7 aux moyens 2 et qui est formé de manière à optimiser individuellement et séparément chacun desdits critères, pour obtenir un individu optimal pour chacun de ces critères. Un individu optimal comprend au moins une valeur optimale et faisable pour ledit critère ;
- un élément 8 qui est relié par l'intermédiaire d'une liaison 9 à l'élément 6 et qui est formé de manière à déterminer, à l'aide d'un algorithme de jeux évolutionnaires, des coefficients de survie desdits individus optimaux reçus de l'élément 6 ; et
- un élément 10 qui est relié par l'intermédiaire d'une liaison 11 à l'élément 8 et qui est formé de manière à déterminer une solution optimale par mutation des individus optimaux, à l'aide desdits coefficients de survie et de l'application d'un opérateur de mutation. Cette solution optimale comprend au moins une valeur optimale finale permettant d'optimiser la réalisation de l'ensemble des objectifs considérés.

Plus précisément, l'élément 8 comprend :

- des moyens 12 qui sont reliés par l'intermédiaire de la liaison 9 à l'élément 6 et qui sont formés de manière à évaluer, pour chacun desdits individus optimaux, sa performance selon chacun des critères autres que le critère relatif à l'individu optimal considéré, de manière à obtenir une matrice d'évaluation (ou matrice de gains) contenant les scores des individus optimaux selon tous les autres critères ; et
- des moyens 13 qui sont reliés par l'intermédiaire d'une liaison 14 auxdits moyens 12 et qui sont formés de manière à évaluer, à l'aide de ladite matrice d'évaluation et de l'algorithme de jeux évolutionnaires, la survie des individus optimaux selon chacun des autres critères, de manière à obtenir lesdits coefficients de survie. De préférence, lesdits coefficients de survie correspondent aux taux à l'équilibre de la population des individus optimaux, comme précisé ci-dessous.

Ainsi, grâce à l'invention, pour un problème multi-objectif donné, le dispositif 1 considère individuellement et séparément chaque objectif, par l'intermédiaire de son critère associé défini par les moyens 2. Puis, l'élément 6 définit, de manière usuelle, l'individu optimal pour chaque critère particulier. Les solutions proposées doivent être faisables (c'est-à-dire réalisables) afin de générer des solutions qui ont un sens du point de vue du système considéré.

Ensuite, on parcourt un espace des solutions complet qui prend en compte tous les critères, ainsi que la faisabilité de la solution. La particularité de cette phase réside dans le principe que la faisabilité d'une solution devient un critère binaire rendant la survie d'un individu nulle si la solution proposée n'est pas faisable. Ainsi, les individus non faisables vont disparaître de la population (ou de l'ensemble) de solutions considérées pour ne laisser place qu'à une population capable de vivre dans le milieu considéré. Cette auto-élimination des individus non faisables est un avantage qui permet de s'éloigner naturellement des solutions non réalisables, et de ce fait, le temps de calcul en est largement réduit.

Ainsi, en testant la survie d'individus optimaux dans leur milieu, on va tester comment ils vont s'adapter à un environnement où cohabitent tous les individus optimaux (selon chacun des critères). Ensuite, une fois la population stabilisée, un opérateur de mutation modifie les individus afin de créer l'individu (à savoir la solution optimale) capable de survivre à n'importe quel milieu de manière stable.

L'élément 10 calcule chaque composante de la solution optimale, par exemple à l'aide du barycentre des composantes correspondantes des individus optimaux, pondéré par le taux à l'équilibre.

Par ailleurs, le dispositif 1 comporte, de plus, un élément 17 pour vérifier la faisabilité de la solution optimale, reçue de l'élément 10 par l'intermédiaire d'une liaison 18, et en cas de non faisabilité, pour déterminer une nouvelle solution optimale correspondant à la solution faisable la plus proche de cette solution optimale (non faisable). Pour ce faire, la sortie de l'élément 17 peut être reliée à la liaison 9 via une liaison 19 pour que les moyens 8 et 10 refassent leurs traitements. L'élément 17 transmet ensuite la solution optimale par l'intermédiaire d'une liaison 20 à des moyens utilisateurs 21 par exemple des moyens d'affichage (qui affichent la solution optimale sur un écran) ou des moyens d'impression (qui impriment la solution optimale). Ces moyens 21 peuvent former avec les moyens 16 une interface homme/machine.

On décrit plus en détail, ci-après, les traitements mis en oeuvre par les différents éléments des moyens 5.

Ainsi, l'élément 6 des moyens 5 optimise individuellement chacun des critères C1 à CN considérés, N étant un entier, à l'aide d'au moins un algorithme d'optimisation approprié. Pour ce faire, l'élément 6 peut utiliser différents types d'algorithme. Dans un mode de réalisation préféré, il utilise un algorithme de type Optimisation par Essaim Particulaire (« Particle Swarm Optimisation » en anglais), tel que défini par exemple dans un article de Leboucher, Chelouah, Siarry et Le Ménec, intitulé "A Swarm Intelligence Method Combined to Evolutionary Game Theory Applied to the Resources Allocation Problem" et publié dans « International Journal of Swarm Intelligence Research » (IJSIR), vol.3, p.20-38, 2012.

La solution fournie doit être unique et optimale selon chaque critère.

Ensuite, après la réception de la population des individus optimaux I1 à IN selon chacun des critères considérés, déterminés par l'élément 6, les moyens 12 évaluent la performance de l'individu optimal I1 (selon le critère C1) avec C2, C3, ..., CN. Ainsi, les moyens 12 obtiennent la performance de cet individu I1 dans les autres espaces de solutions. Cette évaluation est réalisée par les moyens 12 pour tous les individus I1 à IN. Tous les espaces sont normés afin que la comparaison ait un sens.

On obtient alors une matrice de gains (ou d'évaluation) A, dont une valeur A(i,j) évalue l'individu optimal Ii (selon Ci) dans Cj.

Dans un exemple pour N = 6 (pour des individus I1 à I6), on obtient une matrice de gains de type 6x6 comprenant les scores des solutions optimales selon les autres critères. A titre d'illustration, cette matrice A peut s'écrire :

$$A=$$

| | | | | | |
|---|---|---|---|---|---|
| 1,0000 | 0,0196 | 0,3309 | 0,4243 | 0,2703 | 0,1971 |
| 0,8217 | 1,0000 | 0,4299 | 0,8878 | 0,3912 | 0,7691 |
| 0,3968 | 0,8085 | 1,0000 | 0,7551 | 0,3774 | 0,2160 |
| 0,7904 | 0,9493 | 0,3276 | 1,0000 | 0,6713 | 0,4386 |
| 0,8335 | 0,7689 | 0,1673 | 0,8620 | 1,0000 | 0,9899 |
| 0,5144 | 0,8843 | 0,5880 | 0,1548 | 0,1999 | 1,0000 |

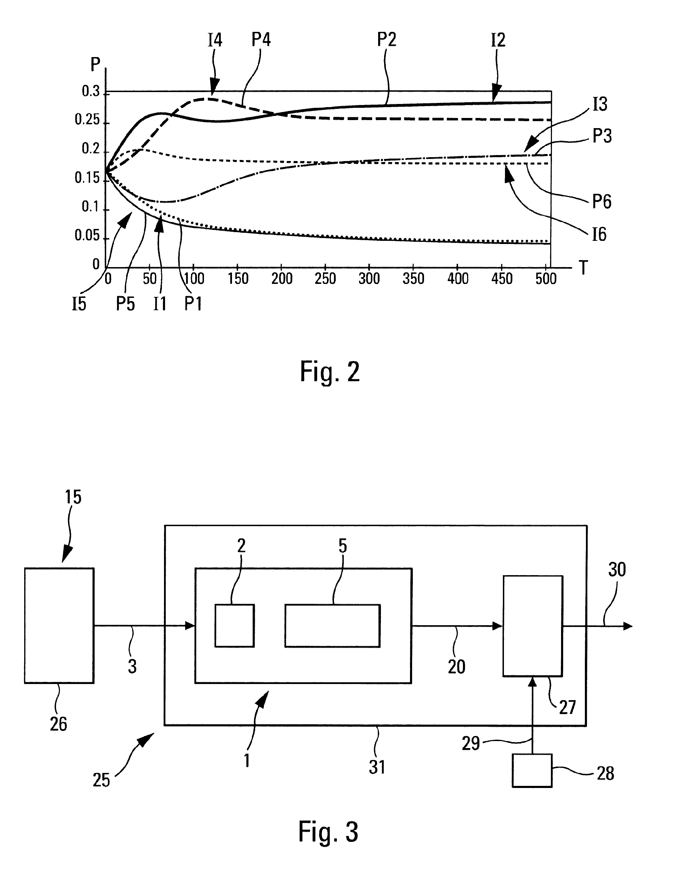

Une fois que la matrice de gains ou dévaluation A est établie, les moyens 1 3 utilisent un algorithme de jeux évolutionnaires pour vérifier la survie des individus optimaux engagés selon les autres critères. On obtient alors un état stable de la population où la proportion finale des individus indique le taux de résistance d'un individu optimal Ii (de critère Ci) aux autres critères Cj, comme représenté sur la figure 2 qui illustre pour chacun des individus I1 à I6 la proportion P de la population (respectivement P1 à P6) en fonction du temps T.

Dans cet exemple de la figure 2, on voit que les individus I1 et I5 ne conviennent pas à tous les critères. En revanche, les individus I2 et I4 s'adaptent très bien aux autres critères. Les individus I3 et I6 présentent, quant à eux, une adaptation comprise entre celles des individus I1 et I5 et celles des individus I2 et I4. On considère à partir de ces résultats que l'individu optimal pour l'ensemble de ces critères est composé des taux à l'équilibre de la population ESS (pour «Evolutionary Stable Strategy» en anglais).

L'élément 10 applique ensuite un opérateur de mutation sur ces individus après avoir identifié les différences entre les individus afin de conserver les « bons gènes » de chaque individu. On obtient alors un individu mutant (à savoir ladite solution optimale) capable de survivre de manière équilibrée dans les espaces de solutions des critères considérés.

Ce processus de mutation des solutions existantes peut prendre la forme d'un barycentre pour chaque composante de la solution, pondéré par le taux à l'équilibre (ESS) obtenu.

Le processus de mutation mis en oeuvre par l'élément 10 peut également prendre des formes différentes. Par exemple, une optimisation de type « Particle Swarm Optimisation » est également possible. Les solutions optimales selon chaque critère représentent alors les particules informatrices de chacun. Ainsi, à chaque itération de l'algorithme, on recompose la matrice de gains pour tenir compte de la solution actuelle et sa survie au milieu des individus optimaux. On procède de cette manière jusqu'à ce que l'ensemble de l'essaim se soit stabilisé. La solution finale est une moyenne des positions obtenues par l'essaim (précision ajustable pour le critère d'arrêt ; par exemple dès que toutes les particules sont situées à moins d'un millième de seconde les unes des autres, on considère l'essaim comme stabilisé).

Ce processus d'évolution pour converger vers une solution stable et faisable peut être obtenu à partir de nombreux procédés différents (algorithmes génétiques ou autres).

Le dispositif 1 conforme à l'invention, tel que décrit ci-dessus, présente ainsi les avantages suivants :

- une capacité à traiter des objectifs très hétérogènes ;
- une sélection naturelle des critères les plus influant en présence des autres critères ; et
- une possibilité de comparer un nombre élevé de critères.

En outre, ledit dispositif 1 permet de garantir la stabilité de la solution finale. En effet, le principe des jeux évolutionnaires et de la convergence des résultats vers une solution stable permet de garantir une stabilité des résultats. Cela se traduit par une robustesse du dispositif 1 conforme à l'invention à des changements mineurs dans le choix des critères.

Par ailleurs, le dispositif 1 permet d'évaluer un individu dans les autres espaces de solution (les espaces définis par les autres critères). Ainsi, cette comparaison permet d'évaluer la valeur d'une solution selon tous les critères et donc de les comparer directement. Cela permet également de détecter les critères qui sont les plus prédominants parmi l'ensemble des critères.

Ledit dispositif 1 conforme à la présente invention peut être appliqué à de nombreux domaines.

Dans une application préférée, ledit dispositif 1 fait partie d'un système 25 de traitement de menaces dans le domaine militaire, notamment de type commande et contrôle, comprenant une allocation d'armes notamment des missiles pour traiter les menaces en particulier aériennes.

Ce système 25 comporte, comme représenté sur la figure 3 :

- des moyens 15 qui comprennent au moins un radar 26 qui transmet au dispositif 1 via la liaison 3 des informations sur la situation environnante, notamment aérienne. Ces moyens 15 peuvent déjà faire partie (au moins en partie) du dispositif 1 ou être dédiés au système 25. Le radar 26 détecte les menaces et transmet les informations correspondantes, notamment de position et de cinématique des menaces ;

- ledit dispositif 1 qui traite ces informations (qui sont d'abord formatées par les moyens 2) pour en déduire une proposition d'engagement, en déterminant tout d'abord à l'aide de l'élément 6 des fenêtres de tir à partir desdites informations formatées, puis en déduisant la proposition d'engagement à partir de ces fenêtres de tir. Cette proposition d'engagement précise une allocation des armes et présente des instants (ou dates) de tir pour traiter (notamment détruire) les différentes menaces ; et

- des moyens 27 pour mettre en oeuvre une étape d'approbation de la proposition d'engagement, reçue du dispositif 1 par la liaison 20. L'approbation est faite par un opérateur à l'aide de moyens 28 (faisant par exemple partie de l'interface homme/machine précitée) qui sont reliés par l'intermédiaire d'une liaison 29 auxdits moyens 27. A cet effet, la proposition d'engagement peut par exemple être affichée par les moyens 21.

Ensuite, l'engagement est réalisé conformément à la proposition d'engagement approuvée par lesdits moyens 27 et transmise par une liaison 30, par exemple à des moyens d'affichage (non représentés). Les moyens 27 et le dispositif 1 (notamment ses moyens 2, 6, 8, 10 et 17) font par exemple partie d'une unité 31 de traitement d'informations.

Dans le cas d'un système 25 de commande et de contrôle dans le domaine militaire, si les deux critères qui permettent d'évaluer une bonne solution sont, d'une part la réactivité du système à intervenir rapidement, et d'autre part la maximisation de la probabilité de succès de la mission, on dispose de deux critères indépendants et même antagonistes. En effet, il vaut mieux attendre qu'une cible soit proche pour augmenter les chances de réussite du tir. Cependant, attendre que la cible se rapproche dégrade la qualité de la solution selon le critère de réactivité du système. L'optimisation selon chaque critère fournit la solution optimale selon chacun des critères, ensuite la théorie des jeux évolutionnaires procède à l'étape finale d'optimisation permettant de déterminer dans quelle mesure les solutions obtenues peuvent survivre l'une en présence de l'autre. Pour cela, on évalue tout d'abord la solution qui optimise le critère de réactivité dans l'espace des solutions du critère de probabilité de succès. Le score obtenu dans l'autre espace est utilisé dans la matrice de gains. La même procédure est suivie pour la solution qui maximise la probabilité de succès du tir en termes de réactivité.

A titre d'illustration, on présente, ci-après, un exemple particulier relatif à une telle application à un système 25 de type C2.

Dans cet exemple, on considère un système 25 de type C2 qui défend une zone attaquée par trois menaces (ou cibles Tj à détruire, j étant un entier de 1 à 3). Ce système dispose de trois missiles Mi, i étant un entier de 1 à 3, pour défendre cette zone.

On suppose que M1 est alloué à T1, M2 à T2 et M3 à T3. Il convient de déterminer la séquence de tir qui optimise, en même temps, la capacité du système à intervenir au plus tôt et sa capacité à maximiser la probabilité de succès de la mission (destruction des cibles Tj). Il faut donc trouver un compromis entre ces deux objectifs qui sont antagonistes. Le dispositif 1 permet d'automatiser ce processus de manière fiable.

A titre d'illustration, on suppose que la solution optimale en termes de réactivité (ou individu optimal) est S1 = [15 18 21], et que la solution qui maximise la probabilité globale de succès (ou individu optimal) est S2 = [31 24 45]. Les trois composantes de chacune de ces solutions représentent les instants de tir (définis en unité de temps) respectivement des trois missiles M1 à M3. Ainsi, pour le critère S1, l'instant de tir optimal pour le missile M2 est «18». On suppose que la matrice de gains A0 est :

$$AO = \begin{bmatrix} 0 & 0,2 \\ 0,7 & 0 \end{bmatrix}$$

Le taux à l'équilibre obtenu est ESS = [0,22 0,78]. Ainsi, la solution de la stratégie S2 survit avec un taux plus important (coefficient de survie de 0,78) que la solution de réactivité S1 (coefficient de survie de 0,22). En prenant en compte la mutation barycentrique indiquée ci-dessus, l'élément 10 détermine alors la solution optimale S suivante :

$$S = [15*0,22 + 31*0,78 \quad 18*0,22 + 24*0,78 \quad 21*0,22 + 45*0,78]$$

$$S = [27,48 \quad 22,68 \quad 39,72].$$

On obtient ainsi une solution optimale S qui tient compte de tous les objectifs et optimise tous les critères.

Une opération supplémentaire reste nécessaire afin de valider la faisabilité de la solution optimale obtenue. Pour ce faire, l'élément 17 applique un simple processus de réparation a postériori qui est, par exemple, basé sur la distance Euclidienne par rapport à la solution faisable la plus proche. Ainsi, si une date de tir obtenue n'est pas possible en raison des contraintes de systèmes par exemple, il suffit simplement de décaler la date de tir proposée à la date disponible la plus proche de la date non faisable.

On a décrit ci-dessus le dispositif 1 dans une application à un système 25 de type C2. Toutefois, de nombreuses autres applications sont possibles. Ainsi, la plupart des problèmes d'optimisation liés à l'industrie présentent la forme de problèmes multi-objectif avec des objectifs qui sont très souvent antagonistes.

Ce type de situation apparaît également dans les applications de contrôle optimal où, par exemple, un bras (ou organe) mécanique doit partir d'un premier point pour aller vers un second point le plus rapidement possible, mais où il est indispensable de respecter une condition de non-dépassement du second point. En chirurgie par exemple, un système instable n'est pas tolérable et les mouvements du bras mécanique doivent être d'une grande précision, mais également d'une rapidité suffisante pour rendre l'opération faisable. Le dispositif 1 conforme à l'invention permet de déterminer une solution permettant de mettre en oeuvre ces deux objectifs de manière optimale.

En outre, on peut également citer :

- le domaine de la finance où des objectifs antagonistes peuvent devoir être optimisés ;
- le domaine de la logistique où il convient, par exemple, de minimiser le temps de livraison tout en minimisant les coûts pour l'entreprise ; et
- le domaine militaire avec une reconnaissance de terrain par des drones. Les drones doivent voler à une altitude suffisante pour avoir une vue d'ensemble sur la zone à observer, mais doivent rester discrets afin de ne pas compromettre leur survie. De ce fait, il est nécessaire d'effectuer un compromis entre la qualité d'observation et la chance de survie.

**Revendications**

1. Dispositif d'optimisation multi-objectif, ledit dispositif comprenant :

   - des moyens (4) d'entrée de données ;
   - des premiers moyens (2) pour définir un critère pour chacun des objectifs considérés, à partir de données entrées ;
   - des deuxièmes moyens (5) pour réaliser automatiquement une optimisation multicritère ; et
   - des moyens utilisateurs (21),

   **caractérisé en ce que** lesdits deuxièmes moyens (5) comprennent au moins :

   - un premier élément (6) pour optimiser individuellement chacun desdits critères, afin d'obtenir un individu optimal (I1 à I6) pour chacun de ces critères, un individu optimal comprenant au moins une valeur optimale et faisable pour ledit critère ;
   - un deuxième élément (8) pour déterminer, à l'aide d'un algorithme de jeux évolutionnaires, des coefficients de survie desdits individus optimaux (I1 à I6); et
- un troisième élément (10) pour déterminer une solution optimale par mutation des individus optimaux, à l'aide desdits coefficients de survie et de l'application d'un opérateur de mutation, ladite solution optimale comprenant au moins une valeur optimale finale permettant d'optimiser la réalisation de l'ensemble des objectifs considérés.

2. Dispositif selon la revendication 1,
**caractérisé en ce que** les moyens (4) d'entrée de données comportent des moyens (15) qui permettent de fournir automatiquement des données.

3. Dispositif selon l'une des revendications 1 et 2,
**caractérisé en ce que** les moyens (4) d'entrée de données comportent des moyens (16) qui permettent à un opérateur d'entrer des données.

4. Dispositif selon l'une des revendications 1 à 3,
**caractérisé en ce que** les moyens utilisateurs (21) comportent des moyens d'affichage qui affichent la solution optimale sur un écran.

5. Dispositif selon les revendications 3 et 4,
**caractérisé en ce que** les moyens d'affichage et les moyens (16) permettant à un opérateur d'entrer des données font partie d'une interface homme/machine.

6. Dispositif selon l'une quelconque des revendications précédentes,
**caractérisé en ce qu'**il comporte, de plus, un élément (17) pour vérifier la faisabilité de la solution optimale, reçue du troisième élément (10), et en cas de non faisabilité, pour déterminer une nouvelle solution optimale correspondant à la solution faisable la plus proche de cette solution optimale.

7. Dispositif selon l'une quelconque des revendications précédentes,
**caractérisé en ce que** le deuxième élément (8) comprend :

- des moyens (12) qui sont formés de manière à évaluer, pour chacun desdits individus optimaux, sa performance selon chacun des critères autres que le critère relatif à l'individu optimal considéré, de manière à obtenir une matrice d'évaluation contenant les scores des individus optimaux selon tous les autres critères ; et
- des moyens (13) qui sont formés de manière à évaluer, à l'aide de ladite matrice d'évaluation et de l'algorithme de jeux évolutionnaires, la survie des individus optimaux selon chacun des autres critères, de manière à obtenir lesdits coefficients de survie.

8. Système d'allocation de ressources,
**caractérisé en ce qu'**il comprend le dispositif spécifié sous l'une quelconque des revendications 1 à 7.

9. Système de traitement de menaces dans le domaine militaire, notamment de type commande et contrôle, comprenant une allocation d'armes pour traiter les menaces, ledit système (25) comportant :

- une première unité (26) pour récupérer des informations sur la situation considérée ;
- une deuxième unité (1) pour traiter ces informations pour en déduire une proposition d'engagement, en déterminant tout d'abord des fenêtres de tir à partir desdites informations, puis en déduisant la proposition d'engagement à partir de ces fenêtres de tir, ladite proposition d'engagement précisant l'allocation des armes et les instants de tir pour traiter les menaces ; et
- une troisième unité (27) pour mettre en oeuvre une étape d'approbation de la proposition de l'engagement, l'engagement étant réalisé conformément à une proposition d'engagement approuvée à l'aide de ladite troisième unité (27),

**caractérisé en ce que** ladite deuxième unité comprend le dispositif (1) spécifié sous l'une quelconque des revendications 1 à 7.

10. Système selon la revendication 9,
**caractérisé en ce que** la première unité (26) comporte au moins un radar qui transmet audit dispositif (1) des informations sur une situation environnante.

**11.** Système selon l'une des revendications 9 et 10,
**caractérisé en ce qu'**il comporte, de plus, une interface homme/machine permettant à un opérateur de réaliser une approbation.

**12.** Système selon l'une des revendications 9 à 11,
**caractérisé en ce qu'**il comporte, de plus, des moyens d'affichage qui affichent la proposition d'engagement approuvée par ladite troisième unité (27).

**13.** Procédé d'optimisation multi-objectif, procédé selon lequel on met en oeuvre de façon automatique les étapes suivantes :

A/ on génère des données et on définit un critère pour chacun des objectifs considérés ; et
B/ on réalise une optimisation multicritère, que l'on utilise ensuite, **caractérisé en ce qu'**à l'étape B/, on met en oeuvre les opérations successives suivantes :

a) on optimise individuellement chacun desdits critères, pour obtenir un individu optimal (I1 à I6) pour chacun de ces critères, un individu optimal comprenant au moins une valeur optimale et faisable pour ledit critère ;
b) à l'aide d'un algorithme de jeux évolutionnaires, on détermine des coefficients dit de survie desdits individus optimaux ; et
c) on détermine une solution optimale par mutation des individus optimaux (1 à I6) à l'aide desdits coefficients de survie et de l'application d'un opérateur de mutation, ladite solution optimale comprenant au moins une valeur optimale finale permettant d'optimiser la réalisation de l'ensemble des objectifs considérés.

**14.** Procédé selon la revendication 13,
**caractérisé en ce qu'**à l'étape B/b) :

b1) pour chacun desdits individus optimaux, on évalue sous forme d'un score sa performance selon chacun des critères autres que le critère relatif à l'individu optimal considéré, de manière à obtenir une matrice d'évaluation qui contient les scores correspondants des différents individus optimaux selon tous les autres critères ; et
b2) on évalue, à l'aide de ladite matrice d'évaluation et de l'algorithme de jeux évolutionnaires, la survie des individus optimaux (I1 à I6) selon chacun des autres critères, de manière à obtenir lesdits coefficients de survie.

**15.** Méthode de traitement de menaces dans le domaine militaire, comprenant une allocation d'armes pour traiter les menaces, méthode selon laquelle on met en oeuvre les étapes successives suivantes :

α) on récupère des informations sur la situation considérée ;
β) on traite ces informations pour en déduire une proposition d'engagement, en déterminant tout d'abord des fenêtres de tir à partir desdites informations, puis en déduisant la proposition d'engagement à partir de ces fenêtres de tir, ladite proposition d'engagement précisant l'allocation des armes et les instants de tir pour traiter les menaces ; et
γ) on prévoit une étape d'approbation de la proposition de l'engagement, l'engagement étant réalisé conformément à une proposition d'engagement approuvée à cette étape γ),

**caractérisée en ce qu'**à l'étape β), on détermine la proposition d'engagement en mettant en oeuvre le procédé spécifié sous l'une des revendications 13 et 14.

Fig. 1

Fig. 2

Fig. 3

**Europäisches Patentamt**
**European Patent Office**
**Office européen des brevets**

# RAPPORT DE RECHERCHE EUROPEENNE

Numéro de la demande

EP 14 29 0029

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CÉDRIC LEBOUCHER ET AL: "A Swarm Intelligence Method Combined to Evolutionary Game Theory Applied to the Resources Allocation Problem", INTERNATIONAL JOURNAL OF SWARM INTELLIGENCE RESEARCH (IJSIR),, vol. 3, no. 2, 1 avril 2012 (2012-04-01), pages 20-38, XP009177627, * le document en entier * | 1-15 | INV. G06Q10/06 G06Q50/28 |
| A | ZNE-JUNG LEE ET AL: "Efficiently Solving General Weapon-Target Assignment Problem by Genetic Algorithms With Greedy Eugenics", IEEE TRANSACTIONS ON SYSTEMS, MAN AND CYBERNETICS. PART B:CYBERNETICS, IEEE SERVICE CENTER, PISCATAWAY, NJ, US, vol. 33, no. 1, 1 février 2003 (2003-02-01), XP011079976, ISSN: 1083-4419 * abrégé * | 1-15 | |
| A | BO LIU ET AL: "A hybrid heuristic particle swarm optimization for coordinated multi-target assignment", INDUSTRIAL ELECTRONICS AND APPLICATIONS, 2009. ICIEA 2009. 4TH IEEE CONFERENCE ON, IEEE, PISCATAWAY, NJ, USA, 25 mai 2009 (2009-05-25), pages 1929-1934, XP031482367, ISBN: 978-1-4244-2799-4 * le document en entier * | 1,8,9, 13,15 | DOMAINES TECHNIQUES RECHERCHES (IPC) G06Q |

Le présent rapport a été établi pour toutes les revendications

| Lieu de la recherche | Date d'achèvement de la recherche | Examinateur |
|---|---|---|
| Munich | 29 avril 2014 | Dedek, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE LEBOUCHER ; CHELOUAH ; SIARRY ; LE MÉNEC.** A Swarm Intelligence Method Combined to Evolutionary Game Theory Applied to the Resources Allocation Problem. *International Journal of Swarm Intelligence Research,* vol. 3, 20-38